# EUROPÄISCHE PATENTSCHRIFT

(11) **EP 2 946 646 B1**
(45) Veröffentlichungstag und Bekanntmachung des Hinweises auf die Patenterteilung: **29.03.2017**
(21) Anmeldenummer: 15001415.7
(22) Anmeldetag: 12.05.2015
(51) Int. Cl.: A01B 59/041

(54) **VORRICHTUNG MIT EINER ARRETIERVORRICHTUNG**
DEVICE WITH A LOCKING DEVICE
DISPOSITIF DOTÉ D'UN DISPOSITIF D'ARRÊT

(30) Priorität: 13.05.2014 DE 202014003944 U
(43) Veröffentlichungstag der Anmeldung: 25.11.2015
(73) Patentinhaber: JRS GmbH & Co. KG, 85119 Ernsgaden (DE)
(72) Erfinder: Sauermann, Johann, 85119 Ernsgaden (DE)
(74) Vertreter: Witzany, Manfred

(56) Entgegenhaltungen:
- EP-A1- 1 342 399
- EP-A2- 2 232 973
- WO-A1-2013/026646
- DE-U1-202012 000 868

## Beschreibung

Die Erfindung betrifft eine Vorrichtung, die relativ zueinander bewegliche mechanische Bauteile aufweist, wobei die relative Beweglichkeit mittels mindestens einer Arretiervorrichtung beeinflussbar ist.

Aus der WO 2013/026646 A1 ist eine gattungsgemäße Vorrichtung bekannt. Es handelt sich dabei um einen Stabilisator für einen Unterlenker eines Drei-Punkt-Geräteanbaus eines Traktors. Dieser weist zwei einander gegenüberliegende Anlenkungen auf, die zur Verbindung mit dem Unterlenker einerseits und dem Traktor andererseits dienen. Eine der Anlenkungen ist mit einem Zylinder verbunden, in dem ein Kolben federnd vorgespannt, längsverschiebbar gelagert ist. An diesem Kolben ist ein Gewinde vorgesehen, welches passend zu einem Gewinde eines Anschlussstücks ausgebildet ist, das die zweite Anlenkung trägt. Mit Hilfe dieses Gewindes kann durch Verdrehen des Anschlussstücks relativ zum Kolben die Länge des Stabilisators den individuellen Bedürfnissen angepasst werden. Die Längsverschiebbarkeit des Kolbens relativ zum Zylinder lässt sich durch eine Klappe arretieren, um den Anbau beispielsweise im Straßenverkehr sicher transportieren zu können. Um eine ungewollte Verdrehung des Anschlussstücks relativ zum Kolben und damit eine unerwünschte Längenänderung des Stabilisators zu verhindern, ist eine Arretiervorrichtung vorgesehen, welche von einem Federbügel gebildet ist. Dieser Federbügel weist zwei Enden auf, die in einem Lager verschwenkbar abgestützt sind. Zu diesem Zweck sind im Lager zwei Bohrungen vorgesehen, in die Enden des Federbügels eingreifen. Diese Bohrungen sind dabei derart angeordnet, dass der Federbügel sowohl in einer Arretierstellung, in der das Anschlussstück relativ zum Kolben nicht verdrehbar ist, als auch in einer Freigabestellung, in der die Verdrehung beider Teile möglich ist, stabil ist. Der Federbügel wird ausschließlich durch seine eigene federnde Vorspannung in den Bohrungen des Lagers gehalten, was insbesondere im rauen landwirtschaftlichen Betrieb durchaus zum Verlust des Federbügels führen kann. Zwar ist der Federbügel unter der Klappe relativ gut vor mechanischen Einwirkungen geschützt, dennoch kann es vorkommen, dass der Federbügel beispielsweise durch Erschütterungen verloren geht.

Der Erfindung liegt die Aufgabe zugrunde, eine Vorrichtung der eingangs genannten Art zu schaffen, die sich durch eine erhöhte Betriebssicherheit auszeichnet.

Diese Aufgabe wird mit den folgenden Merkmalen gelöst.

Eine erfindungsgemäße Vorrichtung weist relativ zueinander bewegliche mechanische Bauteile auf. Dabei ist insbesondere an eine relative Drehbewegung beider mechanischen Bauteile gedacht. Alternativ oder zusätzlich können die mechanischen Bauteile auch gegeneinander verschiebbar oder verschwenkbar sein. Diese Aufzählung ist jedoch nicht abschließend zu verstehen. Häufig kommt es vor, dass für bestimmte Anwendungszwecke die relative Beweglichkeit der mechanischen Bauteile beeinflussbar sein muss. Insbesondere soll diese Beweglichkeit auch unterbindbar sein. Zu diesem Zweck weist die Vorrichtung mindestens eine Arretiervorrichtung auf, welche mindestens einen Federbügel aufweist. Dieser mindestens eine Federbügel ist schwenkbar zwischen einer die relative Bewegung der mechanischen Bauteile ermöglichenden Freigabestellung und einer diese verhindernden Arretierstellung verschwenkbar. Er ist in mindestens einem Lager abgestützt, welches die Schwenkbewegung des mindestens einen Federbügels ermöglicht. Durch die Federwirkung des mindestens einen Federbügels und der gewählten Lagerstellenanordnung ist der mindestens eine Federbügel in der Freigabestellung und in der Arretierstellung jeweils stabil und federnd vorgespannt gehalten. Damit befindet sich zwischen der Freigabestellung und der Arretierstellung eine labile Zwischenstellung, von der aus der mindestens eine Federbügel durch seine eigene Federkraft entweder in die Freigabestellung oder in die Arretierstellung übergeht. Damit bildet der mindestens eine Federbügel eine Art Totpunktverschluss, der für eine definierte Lage des mindestens einen Federbügels sorgt. Zur einfachen Lagerung des mindestens einen Federbügels weist das mindestens eine Lager Bohrungen auf, in die der mindestens eine Federbügel greift. Auf diese Weise ergibt sich eine einfache aber dennoch wirkungsvolle Schwenklagerung des mindestens einen Federbügels.

Zur Erhöhung der Betriebssicherheit dieser Vorrichtung erstreckt sich mindestens ein Endbereich des mindestens einen Federbügels über das mindestens eine Lager hinaus. Damit erstreckt sich der mindestens eine Federbügel beidseits der Bohrungen des mindestens einen Lagers. Zusätzlich ist mindestens einer der Endbereiche hinterschnitten und zumindest in der Arretierstellung formschlüssig im mindestens einen Lager gehalten. Durch dieses formschlüssige Halten des mindestens einen Federbügels ist ein Verlieren desselben grundsätzlich ausgeschlossen. Allerdings ist zu berücksichtigen, dass der mindestens eine Federbügel auch in das mindestens eine Lager montiert werden muss. Dies kann zum einen dadurch bewerkstelligt werden, dass der Formschluss erst nach Montage des mindestens einen Federbügels im mindestens einen Lager erfolgt. Andererseits kann der Formschluss auch derart realisiert werden, dass in einer bestimmten Stellung des mindestens einen Federbügels, die aber nicht die Arretierstellung ist, kein formschlüssiges Halten des mindestens einen Federbügels im mindestens einen Lager besteht. Nachdem sich im Betrieb der mindestens eine Federbügel grundsätzlich immer in seiner Arretierstellung befindet, ist ein Verlieren des mindestens einen Federbügels trotz dieser Formschluss-Lücke nicht möglich. Zusätzlich ist auch daran gedacht, diese Formschluss-Lücke so zu wählen, dass sie auch nicht mit der Freigabestellung übereinstimmt, um auf diese Weise die Haltewirkung des mindestens einen Federbügels weiterzuverbessern. Aufgrund der Federwirkung des mindestens einen Federbügels muss erst eine bestimmte Mindestkraft aufgewendet werden, um diesen aus der Freigabestellung oder aus der Arretierstellung zu bringen. Die Federkraft ist dabei in der Regel so bemessen, dass dies selbsttätig nicht möglich ist. Damit kann der mindestens eine Federbügel in die Formschluss-Lücke nur während des Umlegens von einer stabilen Stellung in die andere in die Formschluss-Lücke geraten. Nachdem der mindestens eine Federbügel in dieser Lage von einer Hand gehalten wird, ist ein Verlieren ausgeschlossen.

Als Hinterschneidung des mindestens einen Endbereichs des mindestens einen Federbügels hat sich mindestens eine Nut bewährt. Diese kann über den gesamten Umfang des mindestens einen Federbügels verlaufen oder aber unterbrochen sein. In dieser mindestens einen Nut ist mindestens ein Sägering gehalten, der den gewünschten Formschluss herstellt. Dieser mindestens eine Sägering wird nach Montage des mindestens einen Federbügels im mindestens einen Lager angebracht.

Alternativ oder zusätzlich kann mindestens einer der Endbereiche des mindestens einen Federbügels auch mindestens ein Gewinde aufweisen. Auf dieses mindestens eine Gewinde ist mindestens eine Mutter aufgeschraubt, die den gewünschten Formschluss herstellt. Auch hier erfolgt die Montage der mindestens einen Mutter erst nach Montage des mindestens einen Federbügels. Zur Erzielung einer sicheren Verbindung zwischen dem mindestens einen Federbügel und der mindestens einen Mutter wird vorzugsweise mindestens eine selbstsichernde Mutter eingesetzt. Alternativ oder zusätzlich können auch mehrere Muttern auf das mindestens eine Gewinde aufgeschraubt werden, die dann gegeneinander gekontert sind.

Alternativ oder zusätzlich kann mindestens einer der Endbereiche des mindestens einen Federbügels auch nietkopfartig aufgeweitet sein. Dies geschieht durch entsprechendes Verformen, wobei insbesondere an Kaltverformen gedacht ist. Auch dies muss nach Montage des mindestens einen Federbügels erfolgen und sorgt für eine vollständig formschlüssige Sicherung des mindestens einen Federbügels.

Alternativ oder zusätzlich kann mindestens einer der Endbereiche des mindestens einen Federbügels auch umgebogen sein. Hierdurch ergibt sich ebenfalls eine formschlüssige Verbindung mit dem mindestens einen Lager, sofern der Biegewinkel hinreichend groß gewählt ist. Je nach Ausbildung des mindestens einen Lagers kann das Umbiegen des mindestens einen Federbügels auch vor dessen Montage im mindestens einen Lager erfolgen. In diesem Fall ist ein späterer Austausch des mindestens einen Federbügels problemlos möglich.

Eine besonders wirkungsvolle Realisierung des umgebogenen Endbereichs ergibt sich, wenn der mindestens eine Endbereich gespalten ist, wobei dessen Teile in unterschiedliche Richtungen umgebogen sind. Vorzugsweise erfolgt die Umbiegung der beiden Teile in diametralen Richtungen, was zu einer sehr sicheren, formschlüssigen Verbindung führt. Dies ist allerdings nur nach Montage des mindestens einen Federbügels im mindestens einen Lager möglich.

Für den Biegewinkel des mindestens einen Endbereichs hat sich ein Bereich zwischen 45° und 135°, vorzugsweise zwischen 75° und 105° bewährt. Damit ergibt sich eine Umbiegung um annähernd 90°, so dass der umgebogene Endbereich leicht über die Fläche des Lagers gleiten kann.

Um bei umgebogenem Endbereich des mindestens einen Federbügels eine Montage im Lager nach der Umformung des mindestens einen Federbügels zu ermöglichen, ist mindestens eine der Bohrungen des mindestens einen Lagers als Langloch ausgebildet. Damit kann der mindestens eine Federbügel mit seinem umgebogenen Endbereich problemlos in dieses mindestens eine Langloch eingefädelt werden, in dem der mindestens eine Federbügel innerhalb der von der Lagerachse und dem umgebogenen Bereich aufgespannten Ebene eingeschwenkt wird. Damit ist ein nachträgliches Entfernen des mindestens einen Federbügels aus dem mindestens einen Lager möglich. Das Langloch bildet dabei allerdings eine Formschluss-Lücke, die aber nur in einer bestimmten Stellung des mindestens einen Federbügels wirkt.

Vorzugsweise erstreckt sich das mindestens eine Langloch in eine Richtung, die nicht der Richtung des umgebogenen Endbereichs des mindestens einen Federbügels in der Arretierstellung entspricht. Damit wird erreicht, dass die Formschluss-Lücke bei einer Stellung des mindestens einen Federbügels auftritt, die nicht der Arretierstellung entspricht. Da der mindestens eine Arretierbügel sich in der Regel in der Arretierstellung befindet, wenn an der Vorrichtung nicht bewusste Veränderungen vorgenommen werden, kann der mindestens eine Federbügel nicht unbeabsichtigt verloren gehen. Vorzugsweise ist das mindestens eine Langloch außerdem so ausgerichtet, dass der umgebogene Endbereich des mindestens einen Federbügels in der Formschluss-Lücke nicht der Freigabestellung des mindestens einen Federbügels entspricht. Damit beschränkt sich die Formschluss-Lücke auf einen Bereich, der vom mindestens einen Federbügel niemals dauerhaft eingenommen werden kann. Der mindestens eine Federbügel ist demnach unverlierbar.

Um den mindestens einen Federbügel leicht montieren zu können, ist mindestens eines der Langlöcher als einseitig offener Schlitz des mindestens einen Lagers ausgebildet. Vorzugsweise ist die andere Bohrung als Langloch ausgebildet, so dass der mindestens eine Federbügel problemlos zuerst mit einem Endbereich im geschlossenen Langloch und dann mit seinem anderen Endbereich im offenen Schlitz eingeführt werden kann. Dies erleichtert die Montage des mindestens einen Federbügels erheblich.

Besonders vorteilhaft lässt sich der Erfindungsgegenstand bei einem Stabilisator für einen Unter- oder Oberlenker einer Drei-Punkt-Aufhängung eines Ackerschleppers anwenden. Dieser weist einen Kolben auf, der eines der relativ zueinander beweglichen mechanischen Bauteile bildet. Dieser Kolben ist in einem Zylinder federnd vorgespannt und längsverschiebbar in diesem Zylinder gehalten. Das andere bewegliche mechanische Bauteil bildet dabei ein Anschlussstück, welches vorzugsweise ein entsprechendes Lagerauge trägt. Dieses Anschlussstück ist mit dem Kolben über zueinander passende Gewinde gekoppelt, wobei beide mechanische Bauteile relativ zueinander verdrehbar sind. Durch dieses Verdrehen wird aufgrund des verbindenden Gewindes eine Längenverstellung des Stabilisators erreicht. Der mindestens eine Federbügel arretiert dabei in seiner Arretierstellung die Verdrehbarkeit beider Teile gegeneinander, so dass auf diese Weise die Längenverstellbarkeit unterbunden wird.

Der Erfindungsgegenstand wird beispielhaft anhand der Zeichnung erläutert, ohne den Schutzumfang zu beschränken.

Es zeigt:
- Figur 1: eine Seitenansicht eines Stabilisators,
- Figur 2: eine Detailansicht der Arretiervorrichtung gemäß Figur 1 in der Arretierstellung,
- Figur 3: eine Detailansicht gemäß Figur 2 von oben,
- Figur 4: eine Detailansicht gemäß Figur 2 in der Freigabestellung,
- Figur 5: eine Detailansicht gemäß Figur 3 in der Freigabestellung,
- Figur 6: eine Darstellung gemäß Figur 3 einer ersten alternativen Ausführungsform,
- Figur 7: eine Darstellung gemäß Figur 3 einer zweiten alternativen Ausführungsform,
- Figur 8: eine Darstellung gemäß Figur 3 einer dritten alternativen Ausführungsform und
- Figur 9: eine Darstellung gemäß Figur 3 einer vierten alternativen Ausführungsform.

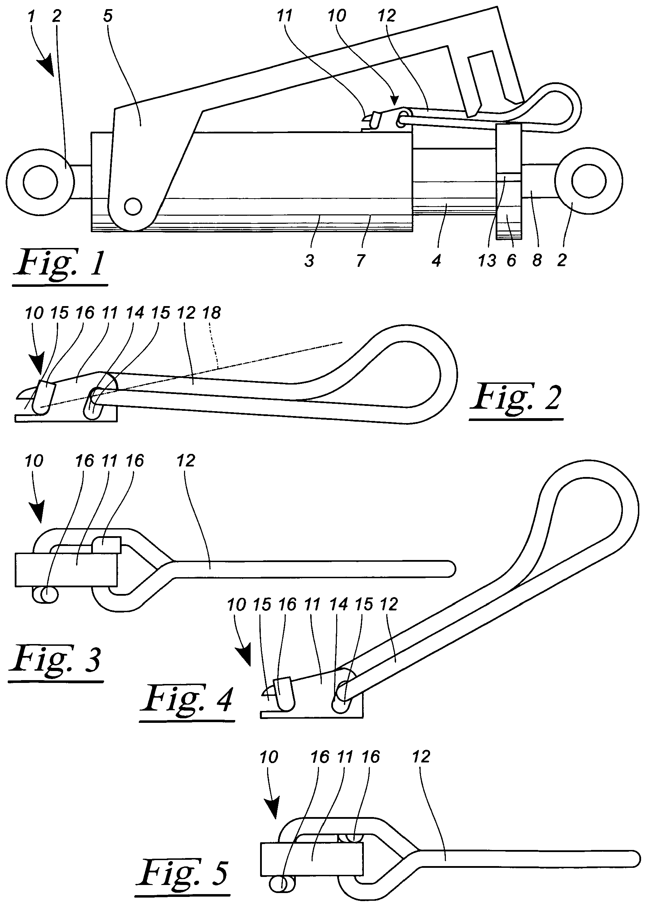

Die Figur 1 zeigt einen Stabilisator, der eine Vorrichtung 1 bildet. Dieser Stabilisator weist Lageraugen 2 auf, mit denen er an einem Unter- bzw. Oberlenker sowie unmittelbar an einem Ackerschlepper montiert ist. Dieser Stabilisator soll insbesondere Seitenbewegungen des Unter- bzw. Oberlenkers verringern bzw. im Straßenverkehr vollständig verhindern.

Der Stabilisator weist einen Zylinder 3 auf, der unmittelbar mit einem der Lageraugen 2 verbunden ist. In diesem Zylinder 3 ist ein Kolben 4 längsverschiebbar gehalten, wobei beide durch eine nicht dargestellte Feder elastisch gekoppelt sind. Das zweite Lagerauge 2 ist mit dem Kolben 4 über ein nicht dargestelltes Gewinde verbunden, über das eine Längenanpassung des Stabilisators möglich ist. Zu diesem Zweck wird der Kolben 4 gegenüber den Lageraugen 2 verdreht, so dass über das Gewinde die entsprechende Längenanpassung erfolgt. Der Kolben 4 und das zweite Lagerauge 2 bilden mechanische Bauteile 7, 8, die zwecks Längenverstellung gegeneinander verdrehbar sind. Die fehlende Kopplung zwischen dem Zylinder 3 und dem Kolben 4 sorgt für eine Führung des Unter- bzw. Oberlenkers, wobei dessen Beweglichkeit nicht vollständig eingeschränkt ist. Dies ist für den Einsatz von Arbeitsgeräten wie beispielsweise Pflügen von großer Bedeutung. Für die Überfahrt im öffentlichen Straßenverkehr wird diese Beweglichkeit mittels einer Sperrklappe 5 aufgehoben. Diese Sperrklappe 5 ist am Zylinder 3 angelenkt und kann ein Widerlager 6 des Kolbens 4 übergreifen.

Die Verdrehbarkeit des Kolbens 4 ist zur Längeneinstellung wichtig, es muss jedoch sichergestellt sein, dass im Betrieb die einmal eingestellte Länge des Stabilisators unverändert bleibt, wobei die von der Feder innerhalb des Zylinders 3 hervorgerufene Längenänderung durchaus gewünscht ist. Zu diesem Zweck weist die Vorrichtung 1 eine Arretiervorrichtung 10 auf, die von einem Lager 11 und einem darin gehaltenen Federbügel 12 gebildet ist. Dieser Federbügel 12 greift in der dargestellten Arretierstellung in Nuten 13 des Widerlagers 6 ein und verhindert auf diese Weise ein unbeabsichtigtes Verdrehen des Kolbens 4 gegenüber den Lageraugen 2.

Der Aufbau und die Funktion der Arretiervorrichtung 10 wird im folgenden anhand der Figuren 2 bis 5 näher erläutert. Die Figuren 2 und 3 zeigen zugeordnete Darstellungen der Arretiervorrichtung 10 in der Arretierstellung und die Figuren 4 bis 5 die gleichen Ansichten in der Freigabestellung. Der Federbügel 12 ist im Lager 11 schwenkbar gehalten. Zu diesem Zweck weist das Lager 11 Bohrungen 14 auf, die beide in Form von Langlöchern 15 ausgebildet sind. Das längsseitige Langloch 15 ist dabei zu einem Schlitz erweitert, so dass der Federbügel 12 problemlos von links her eingeführt werden kann.

Der Federbügel 12 weist Endbereiche 16 auf, die um etwa 90° umgebogen sind. Auf diese Weise ergibt sich eine formschlüssige Verbindung zwischen dem Federbügel 12 und dem Lager 11.

Aufgrund der länglichen Ausbildung der Langlöcher 15 kann der Federbügel 12 noch nach dem Umbiegen seiner Endbereiche 16 im Lager 11 montiert werden. Zu diesem Zweck wird zunächst der rechtsseitige Endbereich 16 des Federbügels 12 in das entsprechende Langloch 15 gesteckt. Dabei wird der Federbügel 12 so gehalten, dass die Längserstreckung des Langlochs 15 in einer vom umgebogenen Endbereich 16 und einer Schwenkachse 17 aufgespannten Ebene liegt. In dieser Lage kann der umgebogene Endbereich 16 in das Langloch 15 eingefädelt werden. Anschließend wird der gegenüberliegende Endbereich 16 in das schlitzförmige Langloch 15 eingefädelt, was durch geringfügiges Aufspreizen des Federbügels 12 möglich ist.

Die Figuren 4 und 5 zeigen die Arretiervorrichtung 10 in der Freigabestellung. In dieser ist der Federbügel 12 entgegen dem Uhrzeigersinn verschwenkt. Die Bohrungen 14 sind dabei so angeordnet, dass eine Verbindungslinie zwischen den Bohrungen 14 zwischen der Arretierstellung und der Freigabestellung des Federbügels 12 liegt. Damit ist der Federbügel 12 einerseits in die in Figur 2 dargestellte Arretierstellung und andererseits in die in Figur 4 dargestellte Freigabestellung federnd vorgespannt. Um den Federbügel 12 von einer dieser Stellungen in die andere zu überführen, wird dieser verschwenkt, wodurch er etwas aufgespreizt wird. Die mit dieser elastischen Verformung verbundenen Deformationskräfte müssen dabei überwunden werden, um den Federbügel 12 in die andere Stellung zu überführen.

Die Langlöcher 15 sind derart ausgerichtet, dass sie sich in Richtungen erstrecken, die die umgebogenen Endbereiche 16 des Federbügels 12 weder in der Arretierstellung noch in der Freigabestellung einnehmen. Dies reduziert die Gefahr, dass sich der Federbügel 12 selbsttägig vom Lager 11 löst.

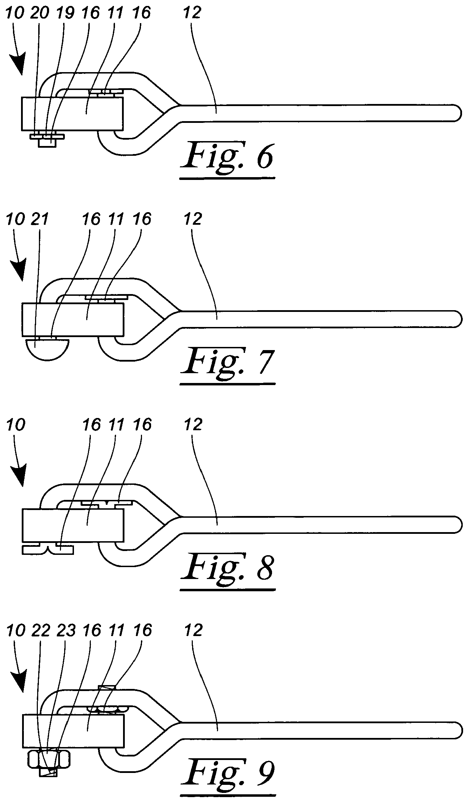

Die Figur 6 zeigt eine alternative Ausführungsform der Arretiervorrichtung 10 gemäß Figur 3, wobei gleiche Bezugszeichen gleiche Teile benennen. Im folgenden wird nur auf die Unterschiede zur Ausführungsform gemäß Figur 3 eingegangen.

Die freien Enden 16 des Federbügels 12 sind bei dieser Ausführungsform nicht umgebogen sondern mit Nuten 19 versehen. In diesen Nuten 19 sind Sägeringe 20 abgestützt, die für eine formschlüssige Sicherung des Federbügels 12 sorgen.

Die Figur 7 zeigt eine weitere alternative Ausführungsform der Arretiervorrichtung 10 gemäß Figur 3, wobei wiederum gleiche Bezugszeichen gleiche Teile benennen. Bei dieser Ausführungsform sind die freien Enden 16 des Federbügels 12 zu nietartigen Köpfen 21 verformt. Diese Verformung kann selbstverständlich nur nach Montage des Federbügels 12 im Lager 10 erfolgen. Damit ist ein späteres Auswechseln des Federbügels 12 recht schwierig, der Federbügel 12 ist jedoch absolut unverlierbar.

Die Figur 8 zeigt eine weitere alternative Ausführungsform der Arretiervorrichtung 10 gemäß Figur 3 wobei gleiche Bezugszeichen wieder gleiche Teile benennen. Bei dieser Ausführungsform sind die freien Endbereiche 16 des Federbügels 12 gespalten und zu diametral gegenüber liegenden Seiten umgebogen. Auch dies kann nur nach Montage des Federbügels 12 geschehen.

Die Figur 9 zeigt eine weitere alternative Ausführungsform, wobei gleiche Bezugszeichen wiederum gleiche Teile benennen. Bei dieser Ausführungsform sind die Endbereiche 16 des Federbügels 12 mit Gewinden 22 versehen, auf die Muttern 23 aufgeschraubt sind. Vorzugsweise handelt es sich hierbei um sogenannte selbstsichernde Muttern. Diese Muttern 23 lassen sich problemlos nachträglich montieren und wieder lösen, so dass ein späterer Austausch des Federbügels 12 möglich ist.

Die dargestellten und beschrieben Ausführungsbeispiele erläutern den Gegenstand lediglich, ohne den Schutzbereich zu begrenzen. Es ist insbesondere daran gedacht, die verschiedenen Ausführungsformen zu kombinieren. Alternativ können die dargestellten Maßnahmen zur Erzielung des Formschlusses abweichend von den dargestellten Ausführungsbeispielen auch nur an einem der Endbereiche 16 des Federbügels 12 realisiert sein.

### Bezugszeichenliste

- 1: Vorrichtung
- 2: Lagerauge
- 3: Zylinder
- 4: Kolben
- 5: Sperrklappe
- 6: Widerlager
- 7: mechanisches Bauteil
- 8: mechanisches Bauteil
- 10: Arretiervorrichtung
- 11: Lager
- 12: Federbügel
- 13: Nut
- 14: Bohrung
- 15: Langloch
- 16: Endbereich
- 17: Schwenkachse
- 18: Verbindungsgerade
- 19: Nut
- 20: Sägering
- 21: Kopf
- 22: Gewinde
- 23: Mutter

## Patentansprüche

1. Vorrichtung, die relativ zueinander bewegliche, mechanische Bauteile (7, 8) aufweist, deren relative Beweglichkeit mittels mindestens einer Arretiervorrichtung (10) beeinflussbar ist, welche mindestens einen Federbügel (12) aufweist, der schwenkbar zwischen einer die relative Bewegung der mechanischen Bauteile (7, 8) ermöglichenden Freigabestellung und einer dieser verhindernden Arretierstellung in mindesten einem Lager (11) verschwenkbar ist, wobei der mindestens eine Federbügel (12) in der Freigabestellung und der Arretierstellung jeweils stabil und federnd vorgespannt gehalten ist, und der mindestens eine Federbügel (12) Bohrungen (14) des mindestens einen Lagers (11) durchdringt, **dadurch gekennzeichnet, dass** sich mindestens ein Endbereich (16) des mindestens einen Federbügels (12) über das mindestens eine Lager (11) hinaus erstreckt, hinterschnitten ist und in der Arretierstellung formschlüssig im mindestens einen Lager (11) gehalten ist.

2. Vorrichtung nach Anspruch 1, **dadurch gekennzeichnet, dass** mindestens einer der Endbereiche (16) des mindestens einen Federbügels (12) mindestens eine Nut (19) aufweist, in die mindestens ein Sägering (20) eingreift.

3. Vorrichtung nach Anspruch 1 oder 2, **dadurch gekennzeichnet, dass** mindestens einer der Endbereiche (16) des mindestens einen Federbügels (12) mindestens ein Gewinde (22) aufweist, auf das mindestens eine Mutter (23) aufgeschraubt ist.

4. Vorrichtung nach mindestens einem der Ansprüche 1 bis 3, **dadurch gekennzeichnet, dass** mindestens einer der Endbereiche (16) des mindestens einen Federbügels (12) nietkopfartig aufgeweitet ist.

5. Vorrichtung nach mindestens einem der Ansprüche 1 bis 4, **dadurch gekennzeichnet, dass** mindestens einer der Endbereiche (16) des mindestens einen Federbügels (12) umgebogen ist.

6. Vorrichtung nach Anspruch 5, **dadurch gekennzeichnet, dass** der mindestens eine umgebogene Endbereich (16) des mindestens einen Federbügels (12) in Teile aufgespalten ist, die in unterschiedliche Richtungen gebogen sind.

7. Vorrichtung nach Anspruch 5 oder 6, **dadurch gekennzeichnet, dass** der mindestens eine umgebogene Endbereich (16) des mindestens einen Federbügels (12) um 45° bis 135° umgebogen ist.

8. Vorrichtung nach mindestens einem der Ansprüche 5 bis 7, **dadurch gekennzeichnet, dass** mindestens eine der Bohrungen (14) des mindestens einen Lagers (11) als Langloch (15) ausgebildet ist.

9. Vorrichtung nach Anspruch 8, **dadurch gekennzeichnet, dass** sich das mindestens eine Langloch (15) in eine Richtung erstreckt, die nicht der Richtung des umgebogenen Endbereichs (16) des mindestens einen Federbügels (12) in der Arretierstellung entspricht.

10. Vorrichtung nach Anspruch 8 oder 9, **dadurch gekennzeichnet, dass** mindestens eines der Langlöcher (15) als einseitig offener Schlitz des mindestens einen Lagers (11) ausgebildet ist.

11. Vorrichtung nach mindestens einem der Ansprüche 1 bis 10, **dadurch gekennzeichnet, dass** eines der relativ zueinander beweglichen mechanischen Teile (7, 8) ein Kolben (4) eines Stabilisators für einen Unter- oder Oberlenker einer Drei-Punkt-Aufhängung eines Ackerschleppers ist, der in einem Zylinder (3) federnd vorgespannt und längsverschiebbar gehalten ist, wobei das andere bewegliche mechanische Bauteil (7, 8) ein Anschlussstück ist, welches zur Längeneinstellung des Stabilisators über ein Gewinde mit dem Kolben (4) gekoppelt ist, und die mechanischen Bauteile (7, 8) gegeneinander verdrehbar sind, wobei der mindestens eine Federbügel (12) in seiner Arretierstellung deren Verdrehbarkeit unterbindet.

## Claims

1. Device which has mechanical components (7, 8) which can be moved relative to one another and of which the relative movement capability can be influenced by means of at least one arresting device (10), which has at least one spring clip (12) which can be pivoted in a pivotable manner in at least one bearing (11) between a release position, which allows the relative movement of the mechanical components (7, 8), and an arresting position, which prevents said movement, wherein the at least one spring clip (12) is retained in a respectively stable and resiliently prestressed manner in the release position and the arresting position, and the at least one spring clip (12) passes through bores (14) in the at least one bearing (11), **characterized in that** at least one end region (16) of the at least one spring clip (12) extends beyond the at least one bearing (11), is undercut and, in the arresting position, is retained in a form-fitting manner in the at least one bearing (11).

2. Device according to Claim 1, **characterized in that** at least one of the end regions (16) of the at least one spring clip (12) has at least one groove (19), in which at least one saw ring (20) engages.

3. Device according to Claim 1 or 2, **characterized in that** at least one of the end regions (16) of the at least one spring clip (12) has at least one thread (22), onto which at least one nut (23) is screwed.

4. Device according to one of Claims 1 to 3, **characterized in that** at least one of the end regions (16) of the at least one spring clip (12) is widened in the manner of a rivet head.

5. Device according to at least one of Claims 1 to 4, **characterized in that** at least one of the end regions (16) of the at least one spring clip (12) is bent over.

6. Device according to Claim 5, **characterized in that** the at least one bent-over end region (16) of the at least one spring clip (12) is split into parts which are bent in different directions.

7. Device according to Claim 5 or 6, **characterized in that** the at least one bent-over end region (16) of the at least one spring clip (12) is bent over by 45° to 135°.

8. Device according to at least one of Claims 5 to 7, **characterized in that** at least one of the bores (14) in the at least one bearing (11) is designed in the form of a slot (15).

9. Device according to Claim 8, **characterized in that** the at least one slot (15) extends in a direction which does not correspond to the direction of the bent-over end region (16) of the at least one spring clip (12) in the arresting position.

10. Device according to Claim 8 or 9, **characterized in that** at least one of the slots (15) is designed in the form of a slot in the at least one bearing (11) which is open on one side.

11. Device according to at least one of Claims 1 to 10, **characterized in that** one of the mechanical parts (7, 8) which can be moved relative to one another is a piston (4) of a stabilizer for a lower link or upper link of a three-point hitch of an agricultural tractor, said piston being retained in a resiliently prestressed and longitudinally displaceable manner in a cylinder (3), wherein the other movable mechanical component (7, 8) is a connection piece, which is coupled to the piston (4) via a thread for length adjustment of the stabilizer, and the mechanical components (7, 8) can be rotated in relation to one another, wherein the at least one spring clip (12), in its arresting position, prevents said components from being able to rotate relative to one another.

## Revendications

1. Dispositif, qui présente des composants mécaniques déplaçables les uns par rapport aux autres (7, 8), dont la mobilité relative peut être influencée au moyen d'au moins un dispositif de blocage (10) qui présente au moins un étrier à ressort (12) qui peut être pivoté dans au moins un palier (11) de manière pivotante entre une position de libération permettant le déplacement relatif des composants mécaniques (7, 8) et une position de blocage empêchant ce déplacement, l'au moins un étrier à ressort (12) étant à chaque fois retenu sous forme précontrainte de manière stable et élastique dans la position de libération et dans la position de blocage et l'au moins un étrier à ressort (12) traversant des alésages (14) de l'au moins un palier (11), **caractérisé en ce qu'**au moins une région d'extrémité (16) de l'au moins un étrier à ressort (12) s'étend au-delà de l'au moins un palier (11), est réalisée en contre-dépouille et est retenue par engagement par correspondance de formes dans au moins un palier (11) dans la position de blocage.

2. Dispositif selon la revendication 1, **caractérisé en ce qu'**au moins l'une des régions d'extrémité (16) de l'au moins un étrier à ressort (12) présente au moins une rainure (19) dans laquelle s'engage au moins une lame de scie (20).

3. Dispositif selon la revendication 1 ou 2, **caractérisé en ce qu'**au moins l'une des régions d'extrémité (16) de l'au moins un étrier à ressort (12) présente au moins un filetage (22) sur lequel est vissé au moins un écrou (23).

4. Dispositif selon au moins l'une quelconque des revendications 1 à 3, **caractérisé en ce qu'**au moins l'une des régions d'extrémité (16) de l'au moins un étrier à ressort (12) est élargie en forme de tête de rivet.

5. Dispositif selon au moins l'une quelconque des revendications 1 à 4, **caractérisé en ce qu'**au moins l'une des régions d'extrémité (16) de l'au moins un étrier à ressort (12) est recourbée.

6. Dispositif selon la revendication 5, **caractérisé en ce que** l'au moins une région d'extrémité recourbée (16) de l'au moins un étrier à ressort (12) est divisée en parties qui sont recourbées dans différentes directions.

7. Dispositif selon la revendication 5 ou 6, **caractérisé en ce que** l'au moins une région d'extrémité recourbée (16) de l'au moins un étrier à ressort (12) est recourbée de 45° à 135°.

8. Dispositif selon au moins l'une quelconque des revendications 5 à 7, **caractérisé en ce qu'**au moins l'un des alésages (14) de l'au moins un palier (11) est réalisé sous forme de trou oblong (15).

9. Dispositif selon la revendication 8, **caractérisé en ce que** l'au moins un trou oblong (15) s'étend dans une direction qui ne correspond pas à la direction de la région d'extrémité recourbée (16) de l'au moins un étrier à ressort (12) dans la position de blocage.

10. Dispositif selon la revendication 8 ou 9, **caractérisé en ce qu'**au moins l'un des trous oblongs (15) est réalisé sous forme de fente, ouverte d'un côté, de l'au moins un palier (11).

11. Dispositif selon au moins l'une quelconque des revendications 1 à 10, **caractérisé en ce que** l'une des pièces mécaniques déplaçables les unes par rapport aux autres (7, 8) est un piston (4) d'un stabilisateur pour un bras oscillant inférieur ou supérieur d'une suspension à trois points d'un tracteur agricole, qui est retenu de manière précontrainte élastiquement et de manière déplaçable longitudinalement dans un cylindre (3), l'autre composant mécanique déplaçable (7, 8) étant une pièce de raccordement qui est accouplée au piston (4) par le biais d'un filetage pour l'ajustement en longueur du stabilisateur, et les composants mécaniques (7, 8) pouvant tourner les uns par rapport aux autres, l'au moins un étrier à ressort (12), dans sa position de blocage, supprimant leur capacité à tourner.
